# EUROPEAN PATENT SPECIFICATION

(11) **EP 0 608 506 B1**
(45) Date of publication and mention of the grant of the patent: **16.07.1997**
(21) Application number: 93118887.4
(22) Date of filing: 24.11.1993
(51) Int. Cl.: F04B 53/00, F04B 39/00, F04B 39/04, F16J 1/18

(54) **Compressor section in an easily assembled motor-compressor unit**
Verdichterteil in einer einfach montierbaren Motor-Verdichter-Einheit
Section compresseur dans une unité moteur-compresseur à assemblage aisé

(30) Priority: 22.12.1992 IT MI922923
(43) Date of publication of application: 03.08.1994
(60) Divisional application: 96107858.1
(73) Proprietor: Whirlpool Europe B.V., 4817 NL Breda (NL)
(72) Inventor: Bianchi, Vittorio, Whirlpool Italia s.r.l., I-21025 Comerio (VA) (IT); Maironi, Giuseppe, Whirlpool Italia s.r.l., I-21025 Comerio (VA) (IT)
(74) Representative: Saconney, Piero

(56) References cited:
- FR-A- 2 330 923
- US-A- 4 913 001

## Description

The invention relates to a motor-compressor unit according to the preamble of claim 1.

A motor-compressor unit of this kind is known from the document FR-A-2 330 923.

In embodiments disclosed by this document the pin, engaged in a recess, is maintained in the recess by retention means constituted by spot welding and/or by deformations of the flanks of the recess.

These known solutions require relatively expensive welding and/or cold deformation (upsetting) equipment.

The object of the invention is to provide a motor-compressor unit of the kind considered, in which the pin, once fitted in its recess in the piston, can be easily and firmly secured in the recess without the use of expensive equipment.

According to the invention this object is attained by a motor-compressor unit as claimed.

Thanks to this solution a pin can be firmly secured in its recess in a piston by simply inserting the retention member within the wall of the piston and bringing the retention member to cooperate by interference with the wall of the piston. This may be done with the aid of a simple mechanical tool.

The present invention will be more apparent from the accompanying drawing, which is provided by way of non-limiting example and in which:
Figure 1 is an exploded view of a part of the compressor section of the motor-compressor unit according to the invention; and
Figure 2 is a longitudinal sectional view of that part of the compressor section shown in Figure 1, but in the assembled state.

With reference to said figures, a motor-compressor unit, for example of hermetic type for use in a refrigerator, freezer or the like, comprises a section 1 for compressing a refrigerant fluid of known type. The section 1 is indicated for simplicity as a compressor section and comprises a connecting rod 2, a piston 3 and a cylinder, with one end of which there is associated a usual valve plate.

The connecting rod 2 comprises an end 7 associated in known manner with a usual rotating shaft driven by a known electric motor (both not shown), an arm 8 extending from said end and terminating in an end 9 comprising an eyelet 10 in which a pin 11 is arranged.

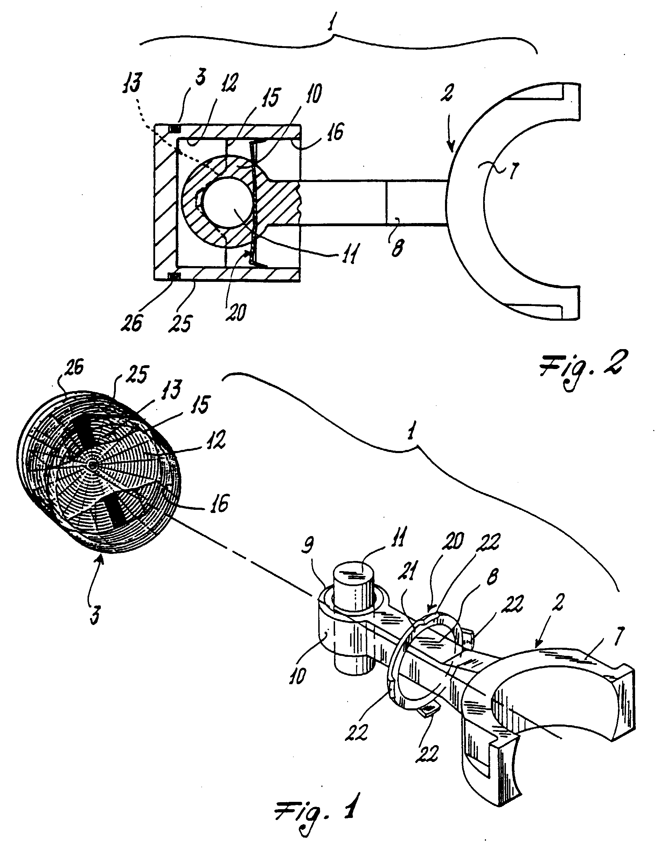

The end 9 and the pin 11 are inserted into mutually perpendicular recesses 12 and 13 in a depressed part 15 of the piston 3 bounded by a wall 16 rising from said part. Specifically, the recess 12 contains the eyelet end 9 of the connecting rod 2, and the recess 13 contains the pin 11 as a forced fit. At least this latter recess has a cross-section of broken-line shape (see Figure 2) to facilitate the forced cooperation of the pin with the recess and hence with the depressed part 15 of the piston 3. This forced cooperation secures the piston to the connecting rod 2.

In order to improve and ensure the connection an elastic ring 20 is associated with the connecting rod 2, and after inserting the pin 11 into the respective recess 13 is able to cooperate with said pin and with the wall 16 of the piston 3.

More specifically, the ring 20 comprises a substantially flat annular part 21 from which portions 22 project radially outwards from the ring in a direction preferably inclined to the annular part, said portions defining a sort of flared interrupted rim, the wall of which (defined by said portions) lies on the lateral wall of a cone with its vertex facing the piston 3.

During the construction of the compressor section 1 the connecting rod 2 is connected to the piston 3 by inserting the end 9 into the recess 12 and fitting the pin 11 into the recess 13 in the piston. The ring 20 is then inserted into this latter so that its portions 22 cooperate by interference with the wall 16 which rises from the part 15 of the piston. The ring retains the end 9 and the pin 11 in their respective seats and ensures a reliable connection between the piston and the connecting rod.

## Claims

1. A motor-compressor unit comprising a cylinder, a piston (3) moving within the cylinder for compressing a fluid, a crankshaft operated by an electric motor, a connecting rod (2) operated by the crankshaft, and a pin (11) carried by one end (9) of the connecting rod (2) and connecting the latter to the piston (3), wherein the piston (3) has a depressed part (15) bounded by a wall (16) raising from said depressed part (15), and a recess (13) in the depressed part (15), the pin (11) is engaged in the recess (13) with a forced cooperation, and retention means (20) are provided to maintain the pin (11) in the recess (13),
characterised in that said retention means comprise a retention member (20) which is distinct from the piston (3), is installed within the piston (3) with an interference fit with said wall (16) and is in engagement with the pin (11).

2. A motor-compressor unit according to claim 1, characterised in that the retention means are in the form of an elastic ring (20) which cooperates with the piston pin (11) and, with an interference fit, with said wall (16) of the piston (3).

3. A motor-compressor unit according to claim 2, characterised in that the elastic ring (20) comprises a substantially flat annular part (21) and portions (22) projecting radially outwards from the ring (20) and cooperating by interference with the wall (16) of the piston (3).

4. A motor-compressor unit according to claim 3, characterised in that said radially projecting portions (22) project from the ring (20) in an inclined direction with respect to the annular part (21), said portions (22) defining a flared interrupted rim which lies on the lateral wall of a cone with its vertex facing the piston (3).

5. A motor-compressor unit according to any of claims 1 to 4, characterised in that a further recess (12) is provided in said depressed part (15) and said further recess (12) contains the end (9) of the connecting rod (2) which carries the pin (11).

6. A motor-compressor unit according to claim 5, characterised in that said further recess (12) is positioned in the depressed part of the piston (3) in a direction perpendicular to that of the recess (13) with which the pin (11) cooperates.

7. A motor-compressor unit according to any of the preceding claims, characterised in that the recess (13) with which the pin (11) cooperates has a cross-section of broken-line shape.

## Patentansprüche

1. Motorkompressoreinheit mit einem Zylinder, einem Kolben (3), der sich im Zylinder bewegt, um ein Fluid zu komprimieren, einer Kurbelwelle, die von einem Elektromotor angetrieben wird, einer Pleuelstange (2), die von der Kurbelwelle angetrieben wird, sowie mit einem Bolzen (11), der von einem Ende (9) der Pleuelstange (2) getragen wird und diese mit dem Kolben (3) verbindet, wobei der Kolben (3) einen vertieften Teil (15), der von einer Wand (16) begrenzt wird, die vom vertieften Teil (15) ausgeht, sowie eine Ausnehmung (13) im vertieften Teil (15) besitzt, wobei der Bolzen (11) in die Ausnehmung (13) mit einem zwangsweisen Zusammenwirken eingreift, und wobei eine Rückhalteeinrichtung (20) vorgesehen ist, um den Bolzen (11) in der Ausnehmung (13) zu halten,
dadurch gekennzeichnet, daß die Rückhalteeinrichtung ein Rückhalteelement (20) enthält, das vom Kolben (3) getrennt ist, in den Kolben (3) mit einer Preßpassung mit der Wand (16) eingebaut wird und mit dem Bolzen (11) in Eingriff steht.

2. Motorkompressoreinheit gemäß Anspruch 1, dadurch gekennzeichnet, daß die Rückhalteeinrichtung die Form eines Federrings (20) besitzt, der mit dem Kolbenbolzen (11) und über eine Preßpassung mit der Wand (16) des Kolbens (3) zusammenwirkt.

3. Flotorkompressoreinheit gemäß Anspruch 2, dadurch gekennzeichet, daß der Federring (20) einen im wesentlichen ebenen, ringförmigen Teil (21) sowie Teile (22) enthält, die vom Ring (20) radial nach außen vorspringen und mit der Wand (16) des Kolbens (3) klemmend zusammenwirken.

4. Motorkompressoreinheit gemäß Anspruch 3, dadurch gekennzeichnet, daß die radial vorspringenden Teile (22) vom Ring (20) schräg zum ringförmigen Teil (21) vorspringen, wo die Teile (22) einen aufgeweiteten, unterbrochenen Rand bilden, der auf der Seitenwand eines Kegels liegt, dessen Spitze dem Kolben (3) gegenüberliegt.

5. Motorkompressoreinheit gemäß irgendeinem der Ansprüche 1 bis 4, dadurch gekennzeichnet, daß eine weitere Ausnehmung (12) im vertieften Teil (15) vorgesehen ist, wobei diese weitere Ausnehmung (12) das Ende (9) der Pleuelstange (2) aufnimmt, das den Bolzen (11) trägt.

6. Motorkompressoreinheit gemäß Anspruch 5, dadurch gekennzeichnet, daß die weitere Ausnehmung (12) im vertieften Teil des Kolbens (3) senkrecht zur Ausnehmung (13) angeordnet ist, mit der der Bolzen (11) zusammenwirkt.

7. Motorkompressoreinheit gemäß irgendeinem der bisherigen Ansprüche, dadurch gekennzeichnet, daß die Ausnehmung (13), mit der der Bolzen (11) zusammenwirkt, einen unterbrochenen Querschnitt besitzt.

## Revendications

1. Groupe moto-compresseur comprenant un cylindre. un piston (3) se déplaçant dans le cylindre pour comprimer un fluide, un vilebrequin actionné par un moteur électrique, une bielle (2) actionnée par le vilebrequin et un axe (11) porté par une extrémité (9) de la bielle (2) et couplant cette dernière au piston (3), dans lequel le piston (3) comporte une partie évidée (15) limitée par une paroi (16) se dressant de ladite partie évidée (15), et une cavité (13) formée dans la partie évidée (15), l'axe (11) est engagé dans la cavité (13) en coopération forcée et des moyens de retenue (20) sont présents pour maintenir l'axe (11) dans la cavité (13),
caractérisé en ce que lesdits moyens de retenue comprennent un élément de retenue (20) qui est distinct du piston (3), qui est installé dans le piston (3) avec ajustement serré sur ladite paroi (16) et qui est en prise avec l'axe (11).

2. Groupe moto-compresseur selon la revendication 1, caractérisé en ce que les moyens de retenue ont la forme d'une bague élastique (20) qui coopère avec l'axe (11) du piston et, par ajustement serré, avec ladite paroi (16) du piston (3).

3. Groupe moto-compresseur selon la revendication 2, caractérisé en ce que la bague élastique (20) comprend une partie annulaire (21) sensiblement plate et des parties (22) qui font saillie radialement vers l'extérieur de la bague (20) et coopèrent en ajustement serré avec la paroi (16) du piston (3).

4. Groupe moto-compresseur selon la revendication 3, caractérisé en ce que lesdites parties (22) qui font saillie radialement dépassent de la bague (20) dans une direction inclinée par rapport à la partie annulaire (21), lesdites parties (22) définissant une moulure évasée et interrompue qui est placée sur la paroi latérale d'un cône dont le sommet fait face au piston (3).

5. Groupe moto-compresseur selon l'une quelconque des revendications 1 à 4, caractérisé en ce qu'une autre cavité (12) est présente dans ladite partie évidée (15) et ladite autre cavité (12) contient l'extrémité (9) de la bielle (2) qui porte l'axe (11).

6. Groupe moto-compresseur selon la revendication 5, caractérisé en ce que ladite autre cavité (12) est placée dans la partie évidée du piston (3) dans une direction perpendiculaire à celle de la cavité (13) avec laquelle coopère l'axe (11).

7. Groupe moto-compresseur selon l'une quelconque des précédentes revendications, caractérisé en ce que la cavité (13) avec laquelle coopère l'axe (11) a une section en forme de ligne brisée.
